(19) Europäisches Patentamt
European Patent Office
Office européen des brevets

(11) Publication number: **0 347 008 B1**

## (12) EUROPEAN PATENT SPECIFICATION

(45) Date of publication of patent specification: **23.08.95**   (51) Int. Cl.⁶: **A23D 7/00**, A23D 9/00

(21) Application number: **89201571.0**

(22) Date of filing: **16.06.89**

(54) **Cream, churned product made therefrom and method of manufacturing them.**

(30) Priority: **17.06.88 GB 8814479**
**24.06.88 GB 8815048**

(43) Date of publication of application:
**20.12.89 Bulletin 89/51**

(45) Publication of the grant of the patent:
**23.08.95 Bulletin 95/34**

(84) Designated Contracting States:
**AT BE CH DE ES FR GB GR IT LI NL SE**

(56) References cited:
EP-A- 0 096 631      EP-A- 0 106 620
EP-A- 0 139 398      EP-A- 0 155 246
EP-A- 0 185 631      EP-A- 0 276 517
DE-A- 1 792 780      FR-A- 1 573 970
US-A- 4 315 955      US-A- 4 425 370
US-A- 4 447 463

(73) Proprietor: **UNILEVER N.V.**
**Weena 455**
**NL-3013 AL Rotterdam (NL)**

(84) Designated Contracting States:
**BE CH DE ES FR GR IT LI NL SE AT**

(73) Proprietor: **UNILEVER PLC**
**Unilever House**
**Blackfriars**
**P.O. Box 68**
**London EC4P 4BO (GB)**

(84) Designated Contracting States:
**GB**

(72) Inventor: **Martine, Jean Claude**
**190 C rue des Ambassadeurs**
**F-95610 Eragny/Oise (FR)**
Inventor: **Vermaat, Karel Theodorus**
**Kruiningenstraat 15**
**NL-3086 KK Rotterdam (NL)**

(74) Representative: **Mulder, Cornelis Willem**
**Reinier, Dr. et al**
**UNILEVER N.V.**
**Patent Division**
**P.O. Box 137**
**NL-3130 AC Vlaardingen (NL)**

## Description

The present invention relates to a cream, to a churned product made therefrom, and to a process for producing such a cream and such a product. In particular the products have a highly granular fat phase with butter-like texture and low butterfat content. While the creams are churnable creams with high iodine values.

Creams are emulsions of the oil-in-water type, and are well known both as starting materials and intermediates in methods for the production of edible spreads, including butter and margarine. In such methods the dispersed fat phase of the cream is converted into a continuous crystallised fat phase in which a dispersed aqueous phase is present.

With dairy cream, particularly in conventional butter-making, this has been accomplished by the well-established method of cooling and working the cream in a churn.

For the purposes of the present specification the term churn and references to churning are intended to embrace respectively all apparatus and methods using such apparatus in which a plasitifed edible fatty emulsion is formed under conditions of relatively low shear. Examples of many types of churning process and apparatus are well known to the man skilled in the art. The term dairy fat as used herein refers to fats obtained from lacteal fluids, whereas the term non-dairy fat refers to fats such as may be obtained from vegetable matter, from animal carcasses or marine sources such as fish. The term animal fat is generally intended to include within its scope fats obtained from animal sources such as animal tallow and lard, but to exclude dairy fats. Other than were the context demands otherwise the terms "oil" and "fat" are considered interchangeable.

During churning partial phase separation occurs with loss of much of the aqueous phase as buttermilk and a concentration of the dairy fat phase in the butter mass. A vast body of literature is concerned with the process conditions and physical changes which subsist during the butter-churning process.

Amongst the literature on butter structure will be found many descriptions of the granular structure of butter. It is believed that the grains are formed by agglomeration of cream fat droplets, which survive into the final churned product. A description of this process is found in European Patent 0098663.

The butter obtained from the conventional churning process has desirable mechanical properties as regards spreading and elasticity over a relatively narrow range of temperatures; much research has concerned how this range can be extended.

Moreover, butter contains a relatively high level of fat having a relatively low level of unsaturation. Details of the exact composition of butterfat can be found in International Dairy Federation document 125 (pp 4-13). Typical compositions for milk fat are 61% saturated fatty acids, 36% mono-unsaturated fatty acids and 3% poly-unsaturated (so-called "essential") fatty acids. In recent years there has been considerable medical interest in reducing the dietary intake of such saturated fats. Many consumers now find a diet rich in saturated fat unacceptable, and research has concerned how a proportion of the fat may be replaced by vegetable oils, as vegetable oils are generally thought to be more dietetically more acceptable, or, by fish oils which are also considered more acceptable than other animal fats.

Churning of margarines is also known. In the original margarine production process described by Mouries in GB 2157 (1869) rendered (fractionated) animal fat having the same melting point as dairy fat was dispersed in milk plasma by churning and the product treated with ice-cold water to cause the emulsion to solidify.

Vegetable oils were first added to margarine fat compositions towards the end of the nineteenth century, in proportions of around 20% in order to soften the end product. The oils used at this time were generally of the lauric fat type, having steep melting curves over a relatively narrow range of temperature. These lauric/animal fat products tended to be too hard and brittle at low temperatures and too soft at high temperatures. However, as the price of animal fats rose, the proportions of vegetable fat continued to rise until by 1907 for example vegetable fat comprised some 25-30% of the fat blend of European margarines. It was not possible to incorporate more than this proportion as the resulting products became far too soft during warm weather.

In 1912-13 edible hydrogenated fats became available in commercial quantities. Hydrogenation generally increases the melting point of fats and tends to products with a smooth melting curve. With the advent of these harder fats it became possible to produce vegetable fat blends having similar melting properties to the animal fats previously employed and the margarine industry became relatively independent of the beef fat and lard market.

In parallel with the establishment of new compositions, new processing techniques became available. In 1905 GB 25404 disclosed a continuous emulsification apparatus consisting of an elongate chamber with a co-axial shaft mounted for rapid rotation. Developments towards higher rates of shear were continued and resulted in the "Votator" (Registered Trade Mark); the first practical scraped-surface heat exchanger. A

2

significant advantage of these high shear methods is that greater proportions of liquid vegetable oil can be incorporated into the product, as compared with the churning methods originally applied to margarine manufacture. A further advantage of the "Votator" process is continuous, rather than bath, preparation of the product. "Votators" and similar apparatus have now largely superseded churns in margarine production. Examples of Votator processing are found in EP 0185631 (ARLA).

The incorporation of liquid vegetable oil into margarines, and the subsequent reduction of the hydrogenated fat content, is also considered to be important for dietary reasons. Whereas vegetable oils which are liquid at ambient temperatures contain relatively high levels of cis-unsaturated fats, partially hydrogenated fats contain a reduced level of these components and fully hydrogenated fats contain exclusively saturated fats. Over the past twenty years there has been an increasing demand for margarine compositions containing progressively higher levels of unsaturated fats, particularly containing the so-called "essential" fatty acids, and consequently higher levels of liquid oils.

A convenient measure of the extent of unsaturation of a fat is the so called "iodine-value". This value is defined as the number of parts by weight of iodine which can combine with 100 parts by weight of fat. Some exemplary iodine values are given in the table below, as are approximate melting points in degrees centigrade;

TABLE ONE

| IODINE VALUES AND MELTING POINT IN COMMON FATS | | |
|---|---|---|
| Fat or Source | Iodine Value (IV) | Melting Point |
| Animal Fats | | |
| Winter Butter | 27-34 | ap. 31 °C |
| Summer Butter | 41-50 | " " |
| Beef Tallow | 42-48 | 40-46 °C |
| Lard (pig fat) | 52-68 | 30-40 °C |
| Lauric Fats | | |
| Coconut Fat | 8-10 | 23-25 °C |
| Palm Kernel Oil | 15-18 | 27-28 °C |
| Palm Oil | 53-60 | 33-39 °C |
| Liquid Oils | | |
| Olive Oil | 83-87 | <0 °C |
| Cottonseed Oil | 104-112 | <0 °C |
| Soybean Oil | 130-135 | <0 °C |
| Sunflower Oil | 127-137 | <0 °C |
| Linseed Oil | 180 | <0 °C |

From the table it can be seen that in general the liquid oils have high iodine-values while solid fats have low iodine values. Hydrogenation of unsaturated fats lowers the iodine values to an extent determined by the degree of hydrogenation.

The general technical problem of margarine manufacture is clear from the table. If a fat has a high iodine value, it is of low melting point and a soft product results when this fat is made into a margarine. Thus there is a limit upon the quantity of liquid fat which be introduced into a margarine, and consequently a limit upon the poly-unsaturated fatty acid content of margarines.

To a great extent this difficulty can be overcome by the use of "Votator" processing as described above. The use of special fat blends to make a butter-like margarine is for example discussed in EP-0130642 (Proctor and Gamble). It is however, difficult to make a butter-like product by a votator process, as the natural non-homogeneous structure of butter is not attained by high shear processing. Consequently there is a need to combine the low-shear churning process with the use of non-dairy fat blends rich in unsaturated fatty acids in order to manufacture churned margarines which contain high levels of liquid oil.

Some theoretical comment on high shear products is useful at this point. It is noted that in conventional churning of dairy cream loss of buttermilk occurs and a 40% fat cream is converted into an 80% fat product. In "votator" processing no buttermilk is lost, therefore the pre- and post-votation materials have the same water content, about 20% of the product weight. Creams with 40% fat therefore can only comprise 1/3 at most of a product the balance being a fat blend. Using a more concentrated cream could allow more cream to be incorporated, but the difficulties of handling concentrated creams are severe. In terms of product properties this limits the amount of fat in granules to a small proportion of the total fat content. Thus, it is difficult to product butter-like products by votator processing.

Some attempt has been made to produce such products by blending dairy fat containing materials with vegetable fats and churning the resulting composition.

For example, European Patent 0106620 (UK Milk Marketing Board) discloses a process in which cream separated from cows milk is blended with soybean oil and hydrogenated soybean oil to produce a composition having the same solid fat content as butter, and thus to overcome seasonal variations in the hardness of butter. Up to 75% of the total fat content can comprise non-dairy triglycerides, without detriment to the rheological properties of the product. However, in order to maintain the hardness of the product it was found necessary to use hydrogenated non-dairy fats, and the preferred combinations of vegetable and dairy fat disclosed in EP 0106620 were close to 50/50 blends.

European patent 0155246 (Svenska MR upa and ARLA) goes further towards an attempt to churn a pure vegetable blend, but stipulates that the iodine value of the blend must be equal to that of butter. Although the examples of this patent again state that excellent products can be made with a 50/50 blend, the product quality deteriorates as the vegetable oil content is increased. When the vegetable fat content reaches 80% the products are only "acceptable with some hesitation". At a vegetable fat content of 90% the products are considered "too soft for commercial use". The skilled man would conclude from this art that even with low iodine values, non-dairy churned products are unlikely to approach the rheology of butter when churned.

EP 0155246 also discusses the so-called "BREGOTT" technology, in which vegetable oil is dosed into a cream. In the original "BREGOTT" method, as disclosed in GB 1217395, dairy cream was blended with oil prior to churning, but after ripening of the cream. In EP0155246 no details are given of the dosing procedure, but the figures indicate that the simple method of pouring the oil into the churn has been employed.

It can be seen that both "BREGOTT" and the products of EP 0155246 are less hard than butter.

Another approach is disclosed in US 4425370 (Madison). In that document, it is proposed to carefully process a skim-milk /vegetable oil cream to achieve an oil-droplet size range essentially similar to that of dairy cream, before blending the non-dairy cream with dairy-cream and churning the mixture. It should be noted that US 4425370 does not give any general details of the distribution of the droplet diameters within the range limits given. However it is stated that by ensuring that the droplet size range of the non-dairy components is "essentially identical" to that of the dairy components it is possible to churn the mixed cream without the addition of emulsifiers. In the examples of that patent, raw dairy cream is mentioned as having droplet sizes ranging from $2.7\mu$ to about $8.0\mu$ with an average globule size of around $4.0\mu$. The average droplet size of the combined vegetable and dairy cream was $5.3\mu$ with an overall range of $2.6\mu$ to $8.0\mu$. As the droplet size of a non-dairy cream is originally much larger than the droplet size of a dairy cream a sufficiently fine dispersion of the oil can be obtained by homogenization of the non-dairy cream.

US 4425370 does not disclose a pure vegetable oil formulation but uses 60% vegetable oil and 40% cream. Thus, the final product contains around 40% butterfat on fat phase.

GB 1216568 discloses a vegetable cream with a high pufa content which can be churned to give a product with 14% poly-unsaturated fatty acids 35.5% mono-unsaturated fatty acids and 50.5% saturated fatty acids. This product would have an iodine value of around 60.

As opposed to the attempts to arrive at a butter-like product with a higher iodine value by adding a suitable liquid oil to dairy cream before churning, attempts have been made to achieve this goal by the use of specific emulsifier systems in combination with steam treatment of a vegetable cream, prior to churning. The technical progress in this direction is set out clearly in US 4315955. That specification discloses how since the 1940's there has been a continued attempt to produce a product which has the advantages of both butter and margarine but the disadvantages of neither product.

The general method disclosed involves the use of a hydrogenated vegetable oil which is mixed with a milk-like phase to produce a cream. The hydrogenated vegetable oil is disposed in the aqueous phase by means of steam treatment followed by the application of a partial vacuum. One difficulty with this method is a tendency for the cream to "pre-churn" causing blockage of the plant. Whereas the prior art to this US patent did not make any particular choice of emulsifier, the teaching of the US patent involves the use of a specific combination of emulsifiers to stabilise the cream prior to churning. As the examples of the US patent demonstrate, the mono-glyceride emulsifiers are particularly good at stabilising a cream, in which the comparatively large oil droplets would otherwise be unstable. Even with the application of these advanced

4

techniques the preferred iodine value of the fat blend used in the method of the invention was no higher than 85.

Further work on the stability of creams is disclosed in EP 139398 (Nabisco). In that patent, the differences between the structure of butter and the structure of margarine are acknowledged. The proposal made in this art is to melt various fats and form an emulsion of all the fats by admixture with an aqueous phase and homogenization, to form a semi-stable cream, which is less stable than dairy cream and which can be inverted in a batch churn. It is noted that in the formulations discussed various emulsifiers must be added to stabilize the cream. The use of emulsifiers is discouraged as these make the cream more stable and consequently make churning more difficult.

Yet another use of the homogenizer is disclosed in GB 2130232. In this specification the homogenizer is used as an alternative to the churn, to bring about phase inversion by form liquid butter which is then mixed with oil in a scraped-surface heat exchanger. This solution, like many found in the art requires the necessary presence of butter-fat to produce a product with acceptable butter-likeness.

Such has been the interest in this area that researchers have gone so far as to include chemically protected unsaturated fats in cattle feed, so as to increase the unsaturated fatty acid content of milk, which is subsequently made into butter.

From the above, it can be seen that the art is replete with specifications relating to butter-like spreads. However experience has shown that none of the products disclosed in the art simultaneously exhibit a stability, texture and ease of manufacture similar to that of butter, without sacrificing the nutritional qualities of margarine by the incorporation of saturated fats, particularly butterfat.

We have now determined how a churned magarine with an iodine value in excess of 85 and butter-like properties can be manufactured. Surprisingly, we have determined that this does not require the use of steam and vacuum treatment or the use of complex fatty acid compositions. Moreover, we have determined that the "break times" during churning are shorter than would be expected in the light of the above mentioned US patent. Our invention concerns the preparation of a cream containing at most a minor portion and preferably little or no dairy fat, prior to churning of this cream to produce a butter-like spread. The method of the invention is not restricted to the preparation of the high iodine-value products, but can be employed in the manufacture of products having iodine values ranging from around 35 to above 100.

According to a first aspect of the present invention there is provided a process for the production of a spread containing a fat phase with an iodine value in excess of 85 and less than 60% butterfat on fat phase which comprises the steps of:

a) preparing a vegetable fat cream having approximately a similar or smaller globule size distribution as dairy cream in the range > $1\mu$ diameter, and optionally dairy cream,

b) dosing into the said vegetable fat cream 5-30% of liquid vegetable oil,

c) churning the cream/oil mixture to obtain a plastified product.

Typically the vegetable fat cream comprises fats having a lower iodine value than the dosed vegetable oil.

While we do not intend to limit the scope of the present invention by any theory of operation, we believe that the following explanation may assist the reader in understanding the present invention.

It is known that dairy cream contains a particular distribution of globule sizes. In general, there are fewer large globules than small globules, but the size difference is such that the major part of the fat resides in larger globules. The distribution of very small globules $\ll 1\mu$ is not well characterized. A realization central to the present invention is that the globules, particularly those of a size range of 1-4 microns, should survive if a good butter is the result. While EP 0155246 does not suggest that care should be taken that such globules should ever be present, it is expected that they will be provided by the dairy cream. With the benefit of hindsight we now see that as the dairy cream content of the non-dairy cream is reduced, so the favorable distribution of droplet sizes is lost and the products become progressively less acceptable in terms of butter-likeness. Moreover, in US 4425370 while the cream droplets are explicitly homogenized to a distribution similar to that of dairy cream, no steps are taken to ensure that these globules survive the churning process. As with EP 0155246, US 4425370 requires the addition of dairy cream and we presume that this was necessary to obtain a firm product.

We have now determined that an acceptable product can be made without the addition of any dairy cream, by not only ensuring that globules are provided in the cream, but that a liquid oil is dosed into the cream to provide sufficient fat for the continuous phase to form without requiring substantial disruption of globules during churning. It is believed that inversion occurs when about 20-30% of the fat phase is present as free fat, the balance of the fat being present in globular form.

Accordingly, a second aspect of the present invention subsists in an edible spread which contains less than 60% butterfat on fat phase weight and which is rich in fat globules as defined herein.

A suitable definition of a spread rich in fat globules is one in which, when viewed under the electron microscope, the average 30x30 micron field contains more than 5, and preferably more than 10, most preferably more than 20, globules of a diameter greater than 3 microns.

Generally, the method of the invention makes use of a continuous churn. Suitable for this purpose is the so-called "fritsch" continuous butter-maker.

It is envisaged that in the presence of some amount of dairy cream the addition of emulsifiers to accomplish churning will not be required. However, it is preferable to include an oil-in-water emulsion disrupter in the pre-mix for churning. Suitable emulsion disrupters include the water-in-oil promoting emulsifiers.

Suitable water-in-oil emulsifiers include the so-called saturated mono-glyceride, tweens and lactic acid ester emulsifiers and lecithins. These are preferably present between 0.05% and 1% by fat phase. Where the drop size of the non-dairy cream employed in the method of the present invention is smaller than dairy cream, it is important that sufficient emulsifier activity is present to promote the formation of a water-in-oil emulsion in the churn. In the absence of a water-in-oil promoting emulsifier a fine cream may be difficult, if not impossible to churn.

Preferably, no dairy cream is added to the non-dairy cream during the process. However, the addition of substantially equal or minor amounts of dairy cream or dairy fats is not excluded. Consequently, the invention extends to products comprising less than 60% butterfat on fat phase, preferably 50% or less butterfat and most preferably 30% or less butterfat.

In a preferred embodiment of the present invention the aqueous phase of the vegetable cream comprises a lacteal fluid, preferably buttermilk or skim-milk. The skim-milk can be natural skim-milk or reconstituted by solution of skim-milk powder in a suitable aqueous medium. The churned by-product buttermilk, whether fresh or recombined can be employed as a component of the aqueous phase.

As mentioned above, the fatty components of the cream are in general non-dairy fats. These may be modified by hydrogenation or interesterification as is well-known in the art of margarine manufacture. However, the use of hydrogenated fat should be minimized where a high content of unsaturated or poly-unsaturated fat is desired.

The hardness of the products of the invention is largely determined by the fat components selected. A range of solids indicia as measured by NMR are given in table 2 below. It can be seen that the product is slightly softer than butter at low temperature, but is otherwise comparable and generally similar to the "Bregott" products discussed above. A suitable method of NMR spectroscopy is described in Haighton et al (Fette Seifen Anstrichmittel No.5 1978).

TABLE TWO

| TYPICAL VARIATION OF SOLIDS CONTENT WITH TEMPERATURE | | | |
|---|---|---|---|
| T°C | Product Solids% | Butter Sol% | Bregott Solids |
| 10 | 30 - 45 | 43 - 52 | 37 - 40 |
| 15 | 22 - 30 | 29 - 36 | 26 - 29 |
| 20 | 16 - 20 | 14 - 20 | 15 - 16 |
| 25 | 8 - 15 | 8 - 11 | 7 - 11 |
| 30 | 3 - 5 | 3 - 5 | 3 - 5 |
| 35 | 0 - 3 | 0 - 1 | 0 - 1 |

An advantage of the low solids at low temperature is that the product is easier to spread at low temperature than butter.

The drop size distribution in the non-dairy cream should be such that the numeric average droplet diameter is below that of fresh dairy cream as mentioned above. Preferably the volume-averaged drop size should be below $5\mu$m and/or more than 50% by number of the non-dairy fat globules present should be below $2\mu$m diameter.

The present invention will be illustrated hereafter by way of example and with reference to the accompanying figures in which are shown;

fig. 1 A schematic figure of a plant for performance of the method of the invention.

fig. 2 Electron micrographs of butter (C), a typical margarine (B) and the present invention (A).

fig. 3 A schematic figure of a plant for the performance of an alternative embodiment of the present invention.

6

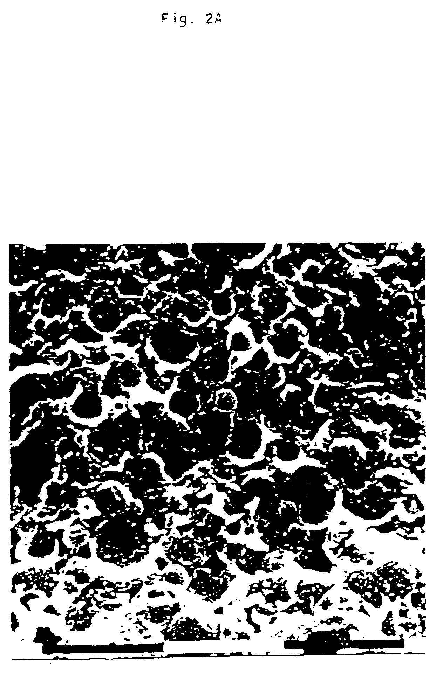

Turning to figure 1, there is shown in a schematic form a plant for the performance of the present invention. This comprises storage tanks for fat phase (1) and waterphase (2), a storage tank (3) for the oil to be dosed into the cream, a static mixer (4), homogenizer (5), Pasteurizer (6), a ripening tank (7), a churn (8) and packing apparatus (9). Process stream pumps and control apparatus have been omitted for clarity. Service streams piping for maintaining the temperature of the water jacketed tanks (1), (2), (3) and (7), and operating the Pasteurizer (6) have also been omitted for clarity.

In general use, the apparatus functions as follows. An oil blend containing a substantial portion of hardened or partially hardened fat is held in tank (1). A water phase is held in tank (2). Waterphase and fat phase are drawn from their tanks along lines (11) and (10) respectively, being combined before mixing in static mixer (4). The mixed oil and fat pass to the homogenizer (5) where a fine dispersion of the fat in a continuous water phase is obtained. The Homogenized cream is heated to a Pasteurization temperature, held for a sufficient time at that temperature and cooled to the ripening temperature in apparatus (6), which may comprise a plate heat exchanger. The Pasteurized cream thus produced passes into ripening tank (7) via line (12). If convenient ripening is conducted overnight, as the time of ripening is not particularly crucial. Ripened cream is drawn from the ripening tank (7) along line (13) and passes into the churn (8) where the product is formed and butter-milk is expressed. Product is packed in packing apparatus (9).

Oil injection was used to dose into the cream liquid oil, from 5% to 30% of liquid oil on fat, preferably about 10% on fat. The injected oil is drawn from tank (3) and is injected into the process stream in line (13) prior to churning. As an alternative oil can be injected in line (12), or preferably prior to the pasteurizer, but in these alternatives good mixing of the oil and cream is necessary.

The following examples further illustrate the application of the present invention in practice.

EXAMPLE 1;

The abovementioned plant was used to produce a churned margarine containing no dairy fat. In this example products prepared with and without oil injection are compared, the remaining processing steps being identical. It is observed that the method in which no oil injection is employed is similar to that disclosed in US patent 4425370, as discussed in detail above.

A fat phase was loaded into tank (1) with the following composition; 37.4% soybean oil, 62.4% soybean oil hardened to a melting point of 36°C, and 0.2% monoglyceride emulsifier. Tank (1) was water-jacketed at 60°C.

An aqueous phase comprising 9% buttermilk powder, 1% Salt and water to 100% was loaded into tank (2). Tank (2) was water-jacketed at a temperature of 60°C.

Liquid soybean oil was loaded into tank (3). Tank (3) was water-jacketed at a temperature of 5°C.

Fat phase and aqueous phase were drawn from tanks (1) and (2) and pumped through the static mixer (4), the homogenizer (5) and the Pasteurizer (6).

The static mixer comprised a plurality of baffles arranged so as to define a serpentine flow path for the mixture of fat and aqueous phase. Flow rates were chosen such that the mixture contained 40wt% fat and 60wt% aqueous phase.

The homogenizer (5) was a "Rannie" two stage homogenizer. The first stage ran at 15 kg/cm$^2$ and the second stage at 15 kg/cm$^2$.

The Pasteurizer (6) was a plate heat exchanger. The Pasteurization temperature was typically above 80°C.

The resulting cream passed into the ripening tank (7) and was held at a temperature of 5°C overnight. The intermediate product at this stage was a cream referred to hereafter as CREAM A.

A sample of the cream was drawn off and the droplet size determined using a "Coulter Counter" (Registered Trade Mark) Model ZM obtained from Coulter Electronics, Northwell Drive, Luton, England. Employing methodology suggested in the "Operator's Handbook for the Coulter Counter Model ZM, issue A, November 1985".

Analysis of the cream revealed that the average droplet size was 3.4μm, taking a D3,2 figure as defined by M. Alderliesten (A Nomenclature for Mean Particle Diameters, Anal Pix., Vol 21).

CREAM A was drawn from the ripening tank, warmed in line to a churning temperature of 10°C and passed into the churn (8). No oil was injected into the cream stream in line (12). The churn was of the Ahlborn type 316/20 and was operated at a beater speed of from 1650 r.p.m.

The churned product was packed at a temperature of 10°C.

The abovementioned experiment was repeated with oil injection, in line (12) prior to churning. The injected oil was drawn from tank (3). The quantity of oil injected was 5% on fat phase content of CREAM A. Packing temperature was 15°C. Thus three products were prepared with the following fat phase compositions;

| Expl. | Composition; |
|---|---|
| 1A: | CREAM A, |
| * 1B; | CREAM A + 5% oil injection, |
| * 1C; | CREAM A + 5% oil injection + culture |

As in all the following tables those products which are considered examples of the present invention are marked with an asterisk. The quantity of fat globules in the product with and without oil injection was measured by electron microscopy and by light microscopy, using a polarizing optical system in the second case. The results of these measurements are given in TABLE FIVE below.

The C-values and other physical and organoleptic parameters of the products were measured. The results set out in TABLE THREE were obtained;

TABLE THREE

| PHYSICAL PROPERTIES OF CHURNED MARGARINES | | | |
|---|---|---|---|
| Property | 1A | 1B* | 1C* |
| Initial C-value; | | | |
| C-5 | 2100 | 1850 | 1600 |
| C-10 | 2000 | 1600 | 1280 |
| C-15 | 1610 | 1190 | 1170 |
| C-20 | 630 | 475 | 490 |
| C-25 | 0 | 0 | 0 |
| C-value after temperature cycling; | | | |
| C-5 | 2000 | 1865 | 1795 |
| C-10 | 1450 | 1420 | 1350 |
| C-15 | 1030 | 890 | 895 |
| C-20 | 480 | 450 | 450 |
| Colour | 48.5 | 48.6 | 43.8 |
| Gloss | 5.8 | 6.3 | 5.7 |

It is noted from the above TABLE THREE that temperature cycling has less effect on the C-values of the products according to the present invention than on the comparative product 1A.

Inspection of samples of product 1C under the electron microscope revealed a characteristic butter-like structure. This is discussed below in further detail. Products 1B and 1C were offered to an experienced tasting panel who expressed the opinion that the products had a butter-like texture.

EXAMPLE 2;

A further batch of CREAM A was prepared as in EXAMPLE 1. A second cream having a 40% total fat content was prepared, hereinafter referred to as CREAM B.

In CREAM B no unhydrogenated oil was present. The fat-phase composition of CREAM B was 99.8% on fat-phase soya bean oil hardened to a melting point of 36°C and 0.2% on fat-phase mono-glyceride emulsifier. The aqueous phase of CREAM B was the same as the aqueous phase of CREAM A.

The average drop size of CREAM B as measured by the method discussed above was 3.7μm.

In order to show that starting with more hard-fat containing globules did not lead to a final product with more butter-like globules present. EXAMPLE 1 was repeated with the addition of CREAM B, and the abovementioned plant was used to produce products having the following fat phase compositions;

| Exmpl. | Composition; |
|--------|--------------|
| 2A | 90% CREAM A + 10% CREAM B + Culture |
| 2B* | 90% CREAM A + 10% CREAM B + Culture + 10% Oil |

The quality of surviving fat globules present in the product was measured by the same method as used in EXAMPLE 1. The results of this analysis are presented in TABLE FIVE below.

Various other physical and organoleptic properties were measured for a sample of product 2B, these are presented in TABLE FOUR.

TABLE FOUR

| PHYSICAL PROPERTIES OF CHURNED MARGARINES | |
|---|---|
| Property | 2B* |
| Initial C-value; | |
| C-5 | 1550 |
| C-10 | 1330 |
| C-15 | 1180 |
| C-20 | 475 |
| C-25 | 0 |
| after temp. cycling; | |
| C-5 | 1850 |
| C-10 | 1350 |
| C-15 | 860 |
| C-20 | 395 |
| Colour | 47.6 |
| Gloss | 5.6 |

It can be seen from this table that although the product is acceptable, some recrystallization of the fat originally present in the globules occurs on temperature cycling, resulting in some post-hardening of the product.

EXAMPLE 3;

In order to demonstrate that the processing steps employed are crucial to obtain a globular structure, a sample of the product referred to above as 1A was carefully melted and processed through a conventional Votator sequence. Thus, the Votator product, hereinafter referred to as 3A, had the same fat composition as 1A. Sample 3A was subjected to the same microscopic analysis as sample 1A.

TABLE FIVE presents a comparison of the light and electron microscope examinations for the products of EXAMPLES 1A, 1B, 1C, 2A, 2B and 3A.

TABLE FIVE;

| PRESENCE OF SURVIVING FAT GLOBULES | | | | | | |
|---|---|---|---|---|---|---|
| Sample | FAT GLOBULE | | | | WATERPHASE | |
| | Light Micro | | Electron Micro | | Electron Micro | |
| | amount | size | amount | size | D3,3 | Dmax |
| 3A(vot) | 0 | - | 0 | - | 8 | 25 |
| 1A | 5 | 5μm | - | - | 3 | 14 |
| 1B* | 8 | 5μm | - | - | 4 | 7 |
| 1C* | 7 | 6μm | 7 | 5μm | 4 | 16 |
| 2A | 3 | 5μm | - | - | 7 | 25 |
| 2B* | 6 | 5μm | 6 | 5μm | 6 | 20 |

SUMMARY OF PRODUCTS:

1A: Cream A 1B:* Cream A + 10% oil 1C:* Cream A + 10% oil + culture 2A: 90% Cream A + 10% Cream B + culture 2B:* 90% Cream A + 10% Cream B + 10% oil + culture 3A: Product of 1A melted and VOTATOR processed

All oil injection percentages are on total fat.

It can be seen immediately from TABLE FIVE that the products of the present invention differ markedly from votated products. In particular, the illustrative votated product has no globules present in the structure and has a coarse water distribution.

The products which were made by the homogenization/oil-injection route (1B, 1C and 2B) of the present invention have more globules present than those (1A and 2A) which were made by alternative routes. Particular attention should be given to EXAMPLE 2A, in which case fewer globules have survived than in EXAMPLE 1A even though the cream used in EXAMPLE 2A had more globular fat bodies present prior to churning.

C/T values for margarine and butter show the characteristic curves for these products. It is noted that the margarine exhibits a characteristic steep C/T line, and butter a characteristic shoulder-like C/T line. The products of the present invention show a relatively flat C/T line.

The C/T lines for the present products are believed to be flat as a result of the globules present. Similar C/T lines have previously been attained by the use of sharp-melting lauric fats or expensive palm mid-fractions. However, the present invention provides a means by which a flat C/T line can be obtained in a spread substantially free of lauric fats or palm mid-fractions. Especially a fat blend of high quality low cost bean oil and other seed oils.

EXAMPLE 4;

The method of EXAMPLE 1 was repeated to produce a melange product with 30% Butterfat and 70% vegetable fat. In order to introduce the butterfat, a 40% fat dairy cream was mixed with a 40% fat vegetable cream, after homogenization but prior to Pasteurization, to form a mixed vegetable and dairy cream referred to hereinafter as CREAM C.

The non-dairy cream had the composition given below in TABLE SIX. The pH of this non-dairy cream was 6.6.

TABLE SIX

| COMPOSITION OF NON-DAIRY CREAM | |
| --- | --- |
| Fat phase; | |
| 37.5% soybean oil | 40.0% |
| 62.5% hardened soybean oil (mp 36 ° C) | 0.2% |
| Monoglyceride emulsifier (on fat) | 4ppm |
| Beta carotene (colour) | |
| Aqueous phase; | |
| Buttermilk powder | 5.8% |
| Salt | 0.7% |
| Water | 53.5% |
| Total; | 100.0% |

The proportions of dairy cream and non-dairy cream combined to form the mixed CREAM C were 30% dairy cream and 70% non-dairy cream.

The N-lines of the vegetable fat employed and CREAM C were;

| Value | Vegetable fat | CREAM C |
| --- | --- | --- |
| N10 | 44.3 | 48.9 |
| N15 | 33.7 | 32.7 |
| N20 | 23.3 | 20.2 |
| N25 | 13.2 | 10.3 |
| N30 | 4.7 | 3.3 |
| N35 | 0.2 | 0.0 |

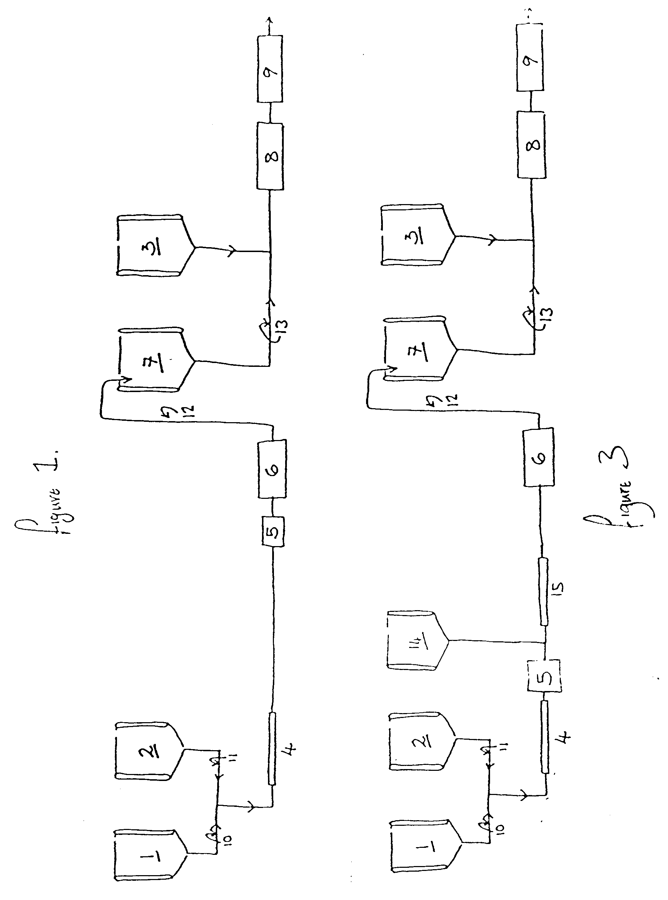

Three products were prepared with proportions of dosed oil of 0, 5 and 10%. These products are hereinafter referred to as 4A, 4B and 4C respectively. The modified process line used for the preparation of these products is shown in figure 3.

It can be seen from figure 3 that the plant bears a strong similarity to that used in EXAMPLE 1, except that an additional tank (14) has been provided for the storage and supply of dairy cream, and an additional, optional, static mixer (15) included to ensure good mixing of the dairy cream and the blend of vegetable fat and water-phase. Otherwise, the same reference numerals are used as in the description of the method of EXAMPLE 1.

In this example the two-stage homogenization led to a dispersion finer than dairy cream, and the homogenized cream contained few clusters of fat droplets. Some properties of the products 4A, 4B and 4C are given in TABLE SEVEN below.

EXAMPLE 5

Further melange products were prepared in which the fat phase comprised 30% Butterfat and 70% vegetable fat. As in EXAMPLE 4, products were produced with 0% 5% and 10% oil injection. In this case homogenization was to a dispersion was finer than dairy cream, but contained some clusters. The process line was identical to that used in EXAMPLE 4 with the omission of the second stage of the homogenizer.

The effect of omitting one stage of the homogenizer is to homogenize the cream without separating clusters of globules into individual globules. This has the effect of making the cream less stable as the churning process is believed to be partially catalyzed by the presence of clusters. However, it was noted that a clustered cream has an occasional tendency to pre-churn in the process line requiring a difficult and time-consuming plant cleaning operation, and further requiring the pre-churned process stream to be discarded with associated financial loss.

## TABLE SEVEN

## EFFECT OF VARIATION OF HOMOGENIZATION CONDITIONS

| Empl | EXAMPLE 4 (2stg) (Stable Cream) | EXAMPLE 5 (1stg) (Unstable Cream) | Butter Likeness |
|---|---|---|---|
| A 0% | Churned Well<br><br>Moderate globules | Tendency to pre-churn<br>Very few globules | 7.1/7.1 |
| B 5% | *Churned Well<br>Very Butterlike<br>Many globules | Tendency to pre-churn<br>Some globules | 7.8/7.0 |
| C 10% | *Churned Well<br>Very Butterlike<br>Many globules | Tendency to pre-churn<br>Moderate globules | 7.5/6.6 |

From the above TABLE SEVEN it can be seen that the products produced from the process in which both 10% oil injection and two-stage homogenization were employed are generally better than those products in which either homogenization or oil injection are not carried out to the same extent. The panel score is a butter-likeness score on a rank of 1-10.

Further results from the experiments of EXAMPLE's 4 and 5 illustrate how the structures of the products obtained differ. These results are presented in TABLE EIGHT below;

TABLE EIGHT

| FURTHER EFFECT OF HOMOGENIZATION CONDITIONS | | | | |
|---|---|---|---|---|
| RELATIVE BUTTERMILK RECOVERY | | | | |
| Empl | EXAMPLE 4 (Stable Cream) | | EXAMPLE 5 (Unstable Cream) | |
| | BEATER | KNEADER | BEATER | KNEADER |
| A | 12.1 | 3.9 | 7.5 | 6.3 |
| B | 10.3 * | 6.1 * | 4.1 | 10.9 |
| C | 12.3 * | 4.5 * | 5.1 | 10.0 |

From TABLE EIGHT it can be seen that the "unstable cream" process leaves most of the water in the product until the kneader stage of the butter-maker, whereas the "stable cream" process expresses most of the water in the beater stage.

EXAMPLE 6;

A melange was prepared with 50% Butterfat and 50% vegetable fat, following the procedure of EXAMPLE 4. This was compared with a product having a similar formulation but no oil injection and a product in which prior to oil injection all the fat in the cream was butterfat. These three formulations are given below in TABLE NINE with the respective identifying code 6A, 6B, 6C.

TABLE NINE

| HIGH-BUTTERFAT MELANGE FORMULATIONS | | | |
|---|---|---|---|
| Product | Cream fatphase (on fat) | | Injected oil |
| * = inv. | Dairy | Non-dairy | |
| 6A | 80% butter | ------------- | 20%BO |
| 6B | 50% butter | 22%BO36,28%BO | ----- |
| 6C* | 50% butter | 22%BO36, 8%BO | 20%BO |

The products 6A, 6B and 6C were analyzed in the electron microscope by the method of Heertje et al. (Food Microstructure Vol 6,1978 pp 1-8). Results of such analysis presented in TABLE TEN.

TABLE TEN

| HIGH-BUTTERFAT MELANGE PRODUCT PROPERTIES | | | |
|---|---|---|---|
| Exmp. | Collar (cycled) | Relative number of globules | Globule size |
| * = inv. | | | |
| 6A | 5 (5) | 10 (datum) | 1-3$\mu$m |
| 6B | 4,5 (3) | 4 | 4-20$\mu$m |
| 6C* | 4,5 (4,5) | 8 | 1-12$\mu$m |

The results given in TABLE TEN show how the method aspect of the present invention enables a product 6C to be made which contains a much larger number of surviving globules than a product with an identical formulation but a different processing history, such as 6B. It is noted that the formulation of the product 6B is similar to that of the examples of European Patent 0106620 as mentioned above. It should also be noted that on the scale of relative number of globules given butter scores around 5.

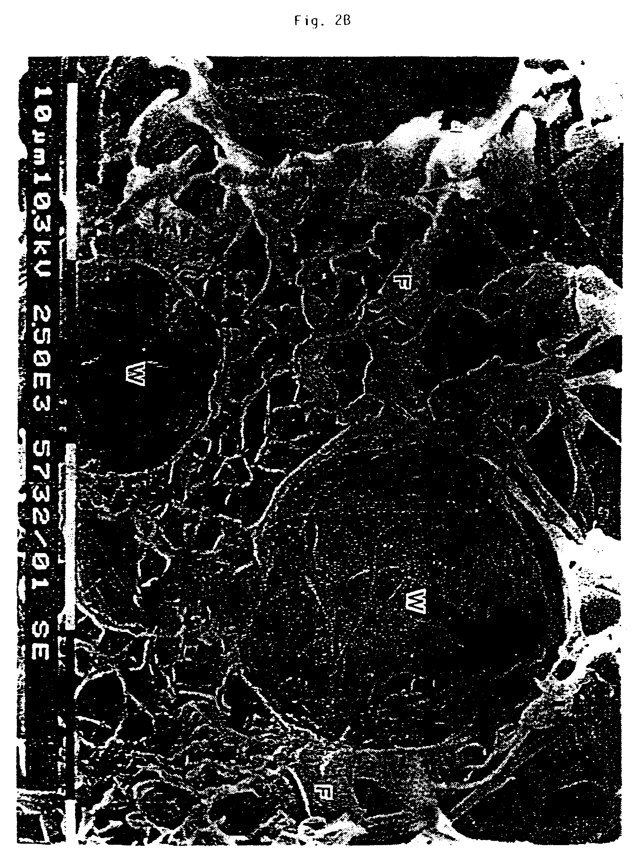

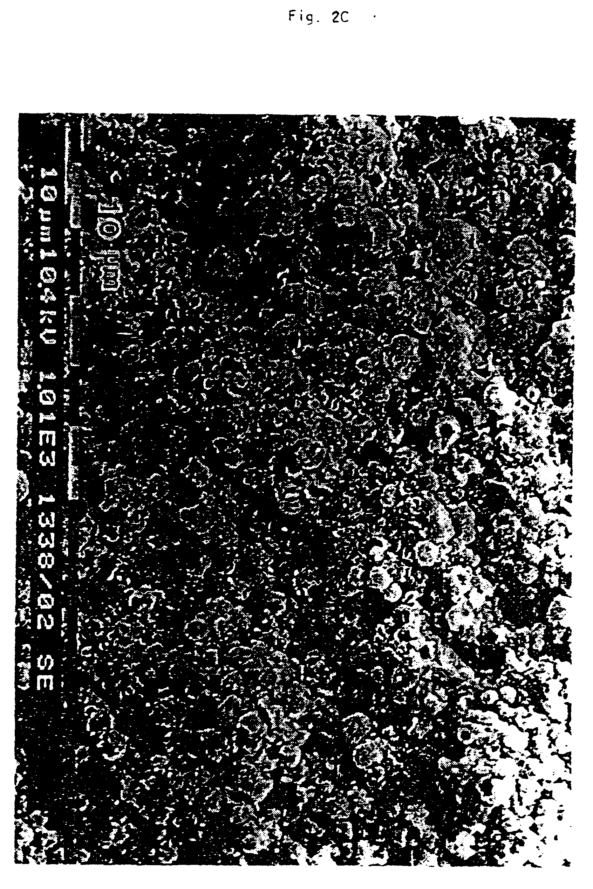

Collar is an analytical measure of plasticity where 1 represents the texture of a bad margarine and 5 that of an excellent butter. Turning finally to figure 2, there are shown electron micrographs of (A) the product of the present invention, (B) a conventional margarine, and (C) butter.

The product shown in figure 2(A) is product 1C of EXAMPLE 1 above.

Figure 2(B) shows a typical margarine structure, in which the white "plates" (marked "F") are a lattice of crystalline fat, and the large, roughly spherical voids (marked "W") are the spaces left by the removal of the water-phase during preparation of the sample. The scale bar in this image shows alternating black and white regions each 10$\mu$m in extent.

Figure 2(C) shows a butter structure with slightly more globules present than are usually found in butter. Not all of the spherical structures visible in the figure are fat-globules, as some of the spheres are water droplets surrounded by a shell of fat. It can be seen that some of the spherical structures appear to be broken, as both damaged spheres and fragments of spheres are visible. The scale bar again comprises alternating black and white regions each 10$\mu$m in extent.

Figure 2(A) shows the globule dominated structure of a product according to the present invention. It can be seen that the product is markedly similar in structure to butter and quite distinct in structure from the margarine shown in figure 2(B). Indeed, the similarity of the structure of the products of the present invention to butter is so strong, that it is difficult to distinguish the products of the present invention from butter by the mere use of an electron-microscope. However, in should be noted that chemical analysis would reveal that the fatty-acid composition of the product 2(A) was inconsistent with that expected from a sample of butter. As in the above-referenced photographs the scale bar comprises alternating black and white regions each 10$\mu$m in extent.

## Claims

1. A process for the production of a spread containing a fat phase with an iodine value in excess of 85 and less than 60% butterfat on fat phase weight which comprises the steps of:

a) preparing a vegetable fat cream having approximately similar or smaller globule size distribution as dairy cream in the range > 1μm diameter, and optionally dairy cream,

b) dozing into the vegetable fat cream 5-30% of liquid vegetable oil,

c) churning the cream/oil mixture to obtain a plastified product.

2. A process as claimed in claim 1 wherein the vegetable fat cream comprises fats having a lower iodine value than the dosed vegetable oil.

3. An edible spread which contains a fat phase with an iodine value in excess of 85 and less than 60% butterfat on fat phase weight and which is rich in fat globules, when viewed under the electron microscope, the average 30x30 micron field contains more than 5, and preferably more than 10, most preferably more than 20, globules of a diameter greater than 3 microns.

**Patentansprüche**

1. Verfahren zur Herstellung eines Brotaufstrichs, der eine Fettphase mit einer Jodzahl von größer als 85 und weniger als 60 Gew.-% Butterfett, bezogen auf die Fettphase, enthält, das die Schritte umfaßt:

a) Herstellung eines Rahms aus pflanzlichem Fett, der im Bereich > 1 μm Durchmesser eine ähnliche oder kleinere Tröpfchengrößenverteilung wie Molkereirahm aufweist, und wahlweise Molkereirahm,

b) Zudosierung von 5 bis 30% eines flüssigen pflanzlichen Öls in den Rahm aus pflanzlichen Fett,

c) Kirnen der Rahm/Ölmischung, wobei ein plastifiziertes Produkt erhalten wird.

2. Verfahren nach Anspruch 1, bei dem der Rahm des pflanzlichen Fetts ein Fett mit einer niedrigeren Jodzahl als das zudosierte pflanzliche Öl umfaßt.

3. Eßbarer Brotaufstrich, der eine Fettphase mit einer Jodzahl von größer als 85 und weniger als 60 Gew.-%, bezogen auf die Fettphase, Butterfett enthält und der, wenn er unter dem Elektronenmikroskop beobachtet wird, reich an Fettkügelchen ist, wobei das durchschnittliche 30 x 30 μm-Feld mehr als 5, und vorzugsweise mehr als 10, insbesondere mehr als 20, Kügelchen eines Durchmessers von mehr als 3 μm enthält.

**Revendications**

1. Procédé de production d'une pâte à tartiner contenant une phase de matière grasse avec un indice d'iode supérieur à 85 et moins de 60 % de matière grasse de lait sur la phase de matière grasse, qui comprend les étapes de :

a) préparation d'une crème de matière grasse végétale ayant une distribution de taille de globule approximativement similaire ou plus petite qu'une crème à base de produit laitier dans l'intervalle > 1 μm de diamètre, et facultativement de crème à base de produits laitiers,

b) dosage, dans la crème de matière grasse végétale, de 5 % à 30 % d'une huile végétale liquide,

c) barattage du mélange crème/huile pour obtenir un produit plastifié.

2. Procédé selon la revendication 1, dans lequel la crème de matière grasse végétale comprend des matières grasses ayant un indice d'iode moins élevé que celui de l'huile végétale dosée.

3. Pâte à tartiner comestible qui contient une phase de matière grasse avec un indice d'iode supérieur à 85 et moins de 60 % de matière grasse de lait sur le poids de la phase de matière grasse et qui est riche en globules de matière grasse, lorsqu'on l'observe au microscope électronique, la zone moyenne de 30x30 microns contient plus de 5, et préférablement plus de 10, plus préférablement plus de 20 globules d'un diamètre supérieur à 3 microns.

Fig. 2A

Fig. 2B

Fig. 2C

Figure 1.

Figure 3